# EUROPEAN PATENT SPECIFICATION

(11) **EP 1 707 833 B1**
(45) Date of publication and mention of the grant of the patent: **26.12.2007**
(21) Application number: 05774358.5
(22) Date of filing: 03.06.2005
(51) Int. Cl.: F16D 1/108, F16D 1/10

(54) **COMBINED COUPLING MEANS WHICH IS INTENDED FOR ROLLER BLIND ACTUATION DEVICES**
FÜR ROLLOBETÄTIGUNGSVORRICHTUNGEN BESTIMMTE KOMBINIERTE KUPPLUNGSMITTEL
MOYEN D'ASSEMBLAGE COMBINE POUR ACCESSOIRES D'ACTIONNEMENT DE STORES A ENROULEMENT

(43) Date of publication of application: 04.10.2006
(73) Proprietor: GAVIOTA SIMBAC, S.L., 03630 Sax (Alicante) (ES)
(72) Inventor: GUILLEN CHICO, Francisco, E-03630 Sax (ES)
(74) Representative: Esteban Perez-Serrano, Maria Isabel
(86) International application number: PCT/ES2005/070084
(87) International publication number: WO 2006/021606

(56) References cited:
- ES-T- 2 130 105
- US-A- 4 437 782
- US-A- 5 152 631
- US-A1- 2002 197 104

## Description

### OBJECT OF THE INVENTION

The object of the present invention is a combined means of coupling for accessories operating roller blinds which due to its special configuration allows the insertion in the end of the articulation of rods with different sections.

With this configuration the transmission of force is possible with rods of different cross sections since the articulation has an interior part formed by segments for supporting each of those sections and the ensuing transmission of force.

### BACKGROUND OF THE INVENTION

Systems are well known in the state of the art which use linking rods between a transmission element and devices which serve to operate roller blinds among which end-of-travel devices can be found, where the coupling between some elements and others is carried out by means of pins and wherein the type of rod to be coupled is unique.

Among the previous systems is to be found the patent with publication number ES2130105 wherein the rod is coupled to a coupling element by means of a pin, and wherein the internal part of the coupling member is only able to hold one rod with a defined cross section for the correct transmission of the force.

Additionally it is also known from the state of the art the polygon connection assembly disclosed in US2002/0197104 where is disclosed a polygonal connection for connecting a shaft with a flange

All these drawbacks are overcome by means of the invention which is disclosed below.

### DESCRIPTION OF THE INVENTION

The present invention relates to a combined means of coupling for accessories operating roller blinds which due to the special configuration thereof allows the insertion of rods with different cross sections in the end of the articulation.

The end of the articulation has an interior part with a change in section, so that the larger section is that nearest the front of the end of the articulation through which the rod is inserted which will be termed the first segment, and the smaller section is after the larger which will be termed the second segment.

Moreover, the larger section circumscribes the smaller section or vice versa, the smaller section is inscribed within the larger section, since if both sections are cut, the production costs increase considerably.

After the smaller section, in the direction of inserting the bar, the interior part of the end of the articulation has a recess wherein a rigid element is inserted.

External to this rigid element and with the form of a toroid, there is a flexible element which acts to seal the rigid element inside the end of the articulation.

The rods have a main segment which is that which rests on the first or second segment of the interior part of the end of the articulation, depending on the section of the bar, and by means of which forces are transmitted.

After this main segment and always in the direction of inserting the rod in the interior part of the end of the articulation, said rod has a circumferential channel, followed by a cylindrical segment, the rod finishing in a pointed form.

Thus when the rod is inserted through the interior part of the end of the articulation, the pointed part of the rod pushes the rigid element in the radial direction and toward the outside of the end of the articulation, deforming the flexible element.

When the circumferential channel reaches the level of the rigid element, it allows the latter to descend on the bar, the flexible element recovering its initial configuration and thereby assuring the coupling since the rod should not support axial forces.

To improve the transmission of force between the end of the articulation and the rod of smaller section, a gland can be placed inside the first segment of the interior part of the end of the articulation.

This gland is such that it has an external section the same as the larger section of the interior part of the articulation and an interior section the same as that of the rod of smaller section for coupling the latter, increasing the contact surface.

Likewise, all that described above for the end of the articulation, occurs on the other end of the rod which is coupled to a certain device.

### DESCRIPTION OF THE DRAWINGS

The present descriptive specification is completed with a set of drawings, which illustrate the preferred embodiment of the invention without restricting the same.

Figure 1 shows a view in perspective of the coupling between the rod and the end of the articulation, wherein the coupling is also shown of the other end of the rod with an end-of-travel device.

Figure 2 shows a cross section of the coupling between the rod of larger section and the end of the articulation. In figure 2A a cross section is shown of the first segment of the end of the articulation.

Figure 3 shows a cross section of the coupling between the smaller section rod and the end of the articulation. In figure 3A a cross section is shown of the first segment of the end of the articulation.

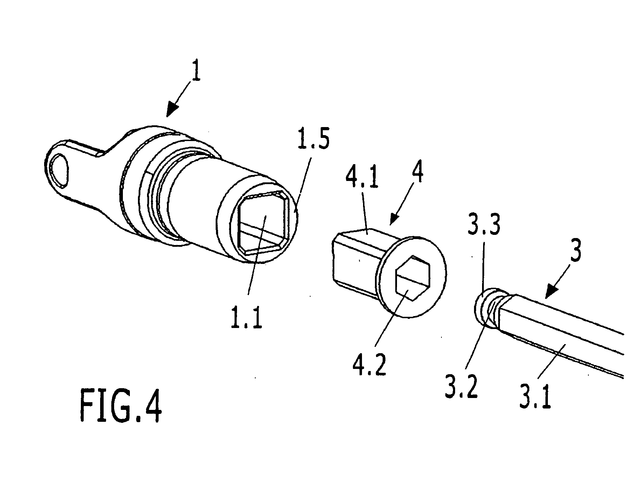

Figure 4 shows a perspective in exploded form of the end of the articulation, the gland and the smaller section bar.

### PREFERRED EMBODIMENT OF THE INVENTION

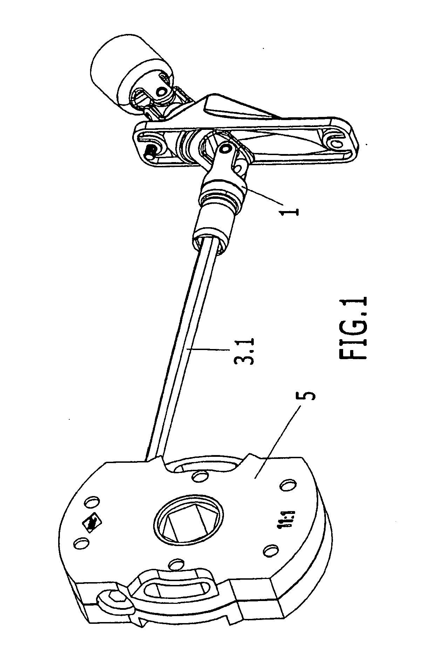

In the light of the foregoing, the present invention relates to a combined means of coupling for accessories operating roller blinds which has an articulation end (1) inside which is inserted a rod (3) which transmits the movement to a device (5), which in this preferred embodiment is an end-of-travel device, such as one observes in Figure 1.

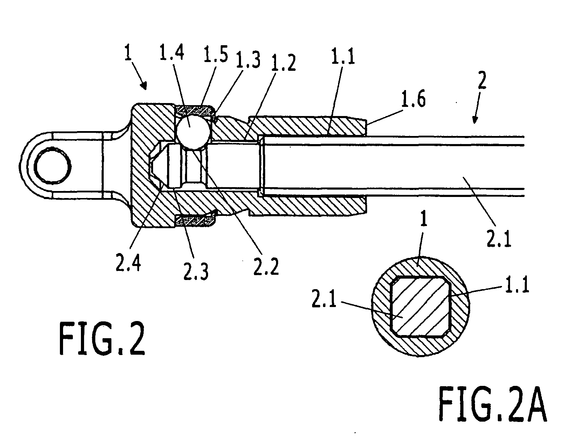

In Figure 2 a rod (2) is shown of larger section, which in this preferred embodiment is essentially square, inserted inside the end of the articulation (1).

A main segment (2.1) of the rod (2) of larger section comes into contact with a first segment (1.1) of the interior part of the end of the articulation (1) since both segments (1.1, 2.1) have the same section.

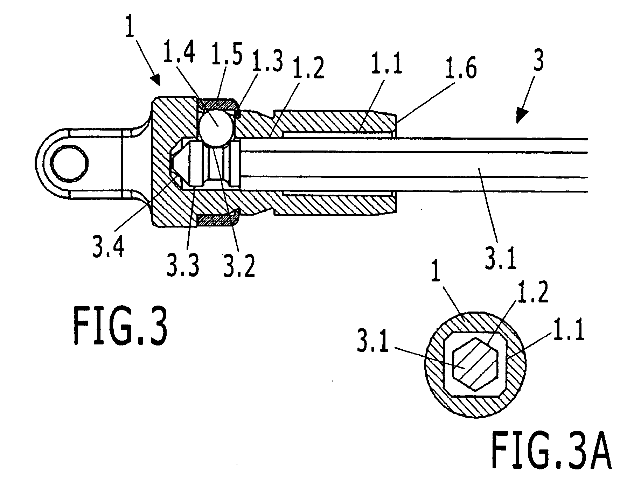

In Figure 3 a rod (3) of smaller section is shown, which in this preferred embodiment is essentially hexagonal, inserted inside the end of the articulation (1).

In this case, a main segment (3.1) of the rod (3) of smaller section comes into contact with a second segment (1.2) of the interior part of the end of the articulation (1) since both segments (1.2, 3.1) have the same section.

After the main segment (2.1, 3.1) and in the direction of inserting the rod (2, 3) in the interior part of the end of the articulation (1), said rods (2, 3) have a circumferential channel (2.2, 3.2), followed by a cylindrical segment (2.3, 3.3) which finishes in a pointed end (2.4, 3.4).

In turn, after the second segment (1.2), the interior part of the end of the articulation (1) has a recess (1.3) wherein is inserted a rigid element (1.4), which in this preferred embodiment is a ball.

External to this rigid element (1.4) and toroidal in form there is a flexible element (1.5) which acts to enclose the rigid element (1.4) inside the end of the articulation (1).

When the rod (2, 3) is inserted, the pointed end (2.4, 3.4) of the same (2, 3) pushes the rigid element (1.4) which deforms the flexible element (1.5) so that said rigid element (1.4) finishes resting in the circumferential channel (2.2, 3.2) when the rod (2, 3) has been inserted, thereby assuring the coupling.

In this preferred embodiment a gland (4) is included between the first segment (1.1) of the interior part of the end of the articulation (1) and the rod (3) of smaller section improving transmission of the force.

This gland (4) has an external section (4.1) identical to the section of the first segment (1.1) of the interior part of the end of the articulation (1) and an interior section (4.2) Identical to the section of the second segment (1.2) of the interior part of the end of the articulation (1).

In addition, the gland (4) has a flange (4.3) which abuts upon the front part (1.6) of the end of the articulation (1).

The coupling of the rods (2, 3) with a device (5) to which they are linked by their other end occurs in the same manner as that described above.

## Claims

1. - Combined means of coupling for accessories operating roller blinds of among those which have an articulation end in which is inserted a rod wherein the interior part of the end of the articulation (1) has a first segment (1.1) with the same section as the main segment (2.1) of a rod (2) of larger section, and a second segment (1.2) with the same section as the main segment (3.1) of a rod (3) of smaller section, **characterized in that** the interior part of the end of the articulation (1) has a recess (1.3) wherein is inserted a rigid element (1.4) on which is mounted externally a flexible element (1.5) so that the rigid element (1.4) rests in a circumferential channel (2.2, 3.2) of the rod (2, 3) preventing axial displacement.

2. - Combined means of coupling for accessories operating roller blinds according to claim 1 **characterized in that** a gland (4) is mounted between the first segment (1.1) of the interior part of the end of the articulation (1) and the rod (3) of smaller section where a flange (4.3) of the gland (4) abuts upon a front part (1.6) of the end of the articulation (1).

3. - Combined means of coupling for accessories operating roller blinds according to claim 1 **characterized in that** the rod (2) of greater section is essentially square and the rod (3) of smaller section is essentially hexagonal.

## Patentansprüche

1. Für Rollobetätigungsvorrichtungen bestimmte kombinierte Kupplungsmittel unter denjenigen, die ein Gelenkende aufweisen, in das eine Stange eingeführt ist, wobei der innere Teil des Gelenkendes (1) ein erstes Segment (1.1) mit dem gleichen Schnitt wie das Hauptsegment (2.1) einer Stange (2) mit einem größeren Schnitt aufweist, und ein zweites Segment (1.2) mit dem gleichen Schnitt wie das Hauptsegment (3.1) einer Stange (3) mit einem kleineren Schnitt, **dadurch gekennzeichnet, dass** der innere Teil des Gelenkendes (1) eine Vertiefung (1.3) aufweist, in die ein starres Element (1.4) eingeführt ist, auf dem äußerlich ein flexibles Element (1.5) montiert ist, so dass das starre Element (1.4) in einem Umfangskanal (2.2, 3.2) der Stange (2, 3) ruht und eine axiale Verschiebung verhindert.

2. Für Rollobetätigungsvorrichtungen bestimmte kombinierte Kupplungsmittel nach Anspruch 1, **dadurch gekennzeichnet, dass** eine Stopfbuchse (4) zwischen dem ersten Segment (1.1) des inneren Teils des Gelenkendes (1) und der Stange (3) mit einem kleineren Schnitt montiert ist, wobei ein Flansch (4.3) der Stopfbuchse (4) auf einen vorderen Teil (1.6) des Gelenkendes (1) stößt.

3. Für Rollobetätigungsvorrichtungen bestimmte kombinierte Kupplungsmittel nach Anspruch 1, **dadurch gekennzeichnet, dass** die Stange (2) mit dem größeren Schnitt im Wesentlichen quadratisch ist und die Stange (3) mit dem kleineren Schnitt im Wesentlichen sechseckig ist.

## Revendications

1. Organe combiné de couplage pour accessoires actionnant des persiennes à rouleau parmi ceux qui possèdent une extrémité à articulation dans laquelle est insérée une tige où la partie interne de l'extrémité de l'articulation (1) possède un premier segment (1.1) avec la même section que le segment principal (2.1) d'une tige (2) de plus grande section, et un second segment (1.2) avec la même section que le segment principal (3.1) d'une tige (3) de plus petite section, **caractérisé en ce que** la partie interne de l'extrémité de l'articulation (1) possède une cavité (1.3) où est insérée un élément rigide (1.4) sur lequel est monté extérieurement un élément flexible (1.5) pour que l'élément rigide (1.4) repose dans un canal circulaire (2.2, 3.2) de la tige (2, 3) empêchant le déplacement axial.

2. Organe combiné de couplage pour accessoires actionnant des persiennes à rouleau selon la revendication 1, **caractérisé en ce qu'**une couronne (4) est montée entre le premier segment (1.1) de la partie interne de l'extrémité de l'articulation (1) et la tige (3) de plus petite section où une collerette (4.3) de la couronne (4) est contiguë à une partie avant (1.6) de l'extrémité de l'articulation (1).

3. Organe combiné de couplage pour accessoires actionnant des persiennes à rouleau selon la revendication 1, **caractérisé en ce que** la tige (2) de plus grande section est essentiellement carrée et la tige (3) de plus petite section est essentiellement hexagonale.
